# EUROPÄISCHE PATENTSCHRIFT

(11) **EP 4 244 654 B1**
(45) Veröffentlichungstag und Bekanntmachung des Hinweises auf die Patenterteilung: **29.10.2025**
(21) Anmeldenummer: 21814692.6
(22) Anmeldetag: 09.11.2021
(51) Int. Cl.: G01S 7/52, G01S 15/87, G01S 15/931

(54) **VERFAHREN ZUR BESTIMMUNG EINER VERSCHMUTZUNG EINES ERSTEN ULTRASCHALLSENSORS, COMPUTERPROGRAMMPRODUKT, COMPUTERLESBARES SPEICHERMEDIUM, ULTRASCHALLSENSORVORRICHTUNG SOWIE ASSISTENZSYSTEM**
METHOD FOR DETERMINING SOILING OF A FIRST ULTRASONIC SENSOR, COMPUTER PROGRAM PRODUCT, COMPUTER-READABLE STORAGE MEDIUM, ULTRASONIC SENSOR APPARATUS, AND ASSISTANCE SYSTEM
PROCÉDÉ DE DÉTERMINATION DE SALISSURE D'UN PREMIER CAPTEUR ULTRASONORE, PRODUIT DE PROGRAMME INFORMATIQUE, SUPPORT DE STOCKAGE LISIBLE PAR ORDINATEUR, APPAREIL DE CAPTEUR ULTRASONORE ET SYSTÈME D'ASSISTANCE

(30) Priorität: 11.11.2020 DE 102020129666
(43) Veröffentlichungstag der Anmeldung: 20.09.2023
(73) Patentinhaber: Valeo Schalter und Sensoren GmbH, 74321 Bietigheim-Bissingen (DE)
(72) Erfinder: HALLEK, Michael, 74321 Bietigheim-Bissingen (DE); ASCHKENASI, Denis, 74321 Bietigheim-Bissingen (DE)
(74) Vertreter: Pothmann, Karsten
(86) Internationale Anmeldenummer: PCT/EP2021/081000
(87) Internationale Veröffentlichungsnummer: WO 2022/101150

(56) Entgegenhaltungen:
- EP-A1- 2 090 898
- EP-A1- 3 130 938
- EP-A1- 3 226 028

## Beschreibung

Die Erfindung betrifft ein Verfahren zur Bestimmung einer Verschmutzung eines ersten Ultraschallsensors einer Ultraschallsensorvorrichtung eines Assistenzsystems eines Kraftfahrzeugs, bei welchem mittels des ersten Ultraschallsensors ein erstes Ultraschallsignal in eine Umgebung des Kraftfahrzeugs ausgesendet wird und das erste in der Umgebung reflektierte Ultraschallsignal mittels des ersten Ultraschallsensors empfangen wird und bei welchem mittels eines zweiten Ultraschallsensors der Ultraschallsensorvorrichtung im Wesentlichen gleichzeitig mit dem ersten Ultraschallsignal ein zum ersten Ultraschallsignal unterschiedliches zweites Ultraschallsignal in die Umgebung ausgesendet wird. Ferner betrifft die Erfindung ein Computerprogrammprodukt, ein computerlesbares Speichermedium, eine Ultraschallsensorvorrichtung sowie ein Assistenzsystem.

Aus dem Stand der Technik sind bereits Kraftfahrzeuge mit Fahrerassistenzsystemen bekannt. Es werden hierbei immer höhere Anforderungen an einen Funktionsumfang gestellt, so dass eine Weiterentwicklung von Ultraschallsensoren notwendig ist. Insbesondere werden Fahrerassistenzsysteme mit Ultraschallsensoren bei der Unterstützung eines Parkvorgangs, einen sogenannte Parkassistenzsysteme, eingesetzt. Hierbei bildet das Parkassistenzsystem einen Bestandteil eines zumindest teilweise autonom betriebenen Kraftfahrzeugs. Für eine zuverlässige Funktion gehört neben einer fehlerfreien Hardware die Erkennung beispielsweise einer Nichtverfügbarkeit eines Ultraschallsensors. Eine generelle Herausforderung für Ultraschallsensoren betrifft die Erkennung einer Verschmutzung der Sensorik, welche die Detektionsleistung reduziert und somit die Zuverlässigkeit des insbesondere zumindest teilweise autonom fahrenden Kraftfahrzeugs reduziert. Insbesondere die Verschmutzung durch beispielsweise Schnee ist in den meisten Fällen nicht detektierbar. Hierbei sind aus dem Stand der Technik bereits Ansätze, wie beispielsweise eine Freisichtprüfung, bekannt. Dabei werden die Ultraschallsensoren auf eine maximale Empfindlichkeit konfiguriert, und eine mögliche Detektion währenddessen dient zu einer Interpretation, dass der Sensor generell in der Lage ist, etwas zu detektieren und somit nicht durch Schnee verschmutzt ist. Nachteilig ist, dass während dieser Prüfung keine Funktion zur Verfügung steht, da der Ultraschallsensor außerhalb der normalen Konfiguration betrieben wird.

Die DE 101 21 519 A1 offenbart die Detektierung externer Materie, wie Schnee oder Schlamm, die an einem Ultraschallsensor haftet. Ein Hindernis reflektiert die Übertragung der Wellen von einem Ultraschallsensor, und die direkten Wellen werden durch einen Ultraschallsensor empfangen, wodurch das Hindernis detektiert wird. Der Ultraschallsensor erzeugt direkte Wellen, die direkt durch die Ultraschallsensoren empfangen werden, und demnach sind die Ultraschallsensoren zum Überwachen auch der direkten Wellen ausgebildet. Die direkten Wellen werden dann gedämpft, wenn externe Materie, wie Schnee oder Schlamm, an dem Ultraschallsensor haftet, und das Vorliegen externer Materie wird gemäß dieser Dämpfung detektiert.

Die DE 199 24 755 A1 schafft eine Abstandserfassungsvorrichtung zur Erfassung des Abstands von Objekten anhand von Wellensignalen, die von der Abstandserfassungsvorrichtung emittiert und von den Objekten reflektiert werden, mit einer Sende-/Empfangseinrichtung zum Senden und Empfangen von Wellensignalen mit mindestens einer ersten und zweiten räumlich voneinander beabstandeten Sende- und/oder Empfangseinheit, von denen die erste zumindest eine Sendefunktion und die zweite zumindest eine Empfangsfunktion aufweist. Die beiden Einheiten sind derart gestaltet, dass die zweite Einheit die von der ersten Einheit emittierten Wellensignale als Übersprechsignale empfangen kann und wobei entweder die erste Einheit oder die zweite Einheit die von der ersten Einheit emittierten Wellensignale als Reflexionssignale empfangen kann. Mit einer Störungsbestimmungseinrichtung zum Ermitteln mindestens eines charakteristischen Parameters der in der zweiten Einheit empfangenen Übersprechsignale und zur Bestimmung einer Störung basierend auf dem ermittelten charakteristischen Parameter ist die Abstandserfassungsvorrichtung ebenfalls versehen.

Die DE 10 2011 118 643 A1 betrifft eine Fahrerassistenzeinrichtung für ein Kraftfahrzeug, mit einem ersten Ultraschallsensor mit einer Membran zum Aussenden und Empfangen von Ultraschallwellen, wobei der erste Ultraschallsensor eine erste Resonanzfrequenz aufweist, und mit einem Ultraschallsensor mit einer Membran zum Aussenden und Empfangen von Ultraschallwellen, wobei der zweite Ultraschallsensor eine von der ersten Resonanzfrequenz unterschiedliche zweite Resonanzfrequenz aufweist. Eine Steuereinrichtung steuert die Ultraschallsensoren an und ist dazu ausgelegt, zumindest den ersten Ultraschallsensor zwischen einem ersten Betriebsmodus, in welchem der erste Ultraschallsensor die Ultraschallwellen mit der ersten Resonanzfrequenz aussendet, und einem zweiten Betriebsmodus zu schalten, in welchem der ersten Ultraschallsensor die Ultraschallwellen mit der zweiten Resonanzfrequenz aussendet.

Weiterer relevanter Stand der Technik ist in EP3226028A1, EP2090898A1 und EP3130938A1 offenbart.

Aufgabe der vorliegenden Erfindung ist es, ein Verfahren, ein Computerprogrammprodukt, ein computerlesbares Speichermedium, eine Ultraschallsensorvorrichtung sowie ein Assistenzsystem zu schaffen, mittels welchen verbessert eine Verschmutzung eines Ultraschallsensors bestimmt werden kann.

Diese Aufgabe wird durch ein Verfahren, ein Computerprogrammprodukt, ein computerlesbares Speichermedium, eine Ultraschallsensorvorrichtung sowie ein Assistenzsystem gemäß den unabhängigen Patentansprüchen gelöst. Vorteilhafte Ausgestaltungsformen sind in den Unteransprüchen angegeben.

Ein Aspekt der Erfindung betrifft ein Verfahren zum Bestimmen einer Verschmutzung eines ersten Ultraschallsensors einer Ultraschallsensorvorrichtung eines Assistenzsystems eines Kraftfahrzeugs, bei welchem mittels des ersten Ultraschallsensors ein erstes Ultraschallsignal in eine Umgebung des Kraftfahrzeugs ausgesendet wird und das erste in der Umgebung reflektierte Ultraschallsignal mittels des ersten Ultraschallsensors empfangen wird und bei welchem mittels eines zweiten Ultraschallsensors der Ultraschallsensorvorrichtung im Wesentlichen gleichzeitig mit dem ersten Ultraschallsignal ein zum ersten Ultraschallsignal unterschiedliches zweites Ultraschallsignal in die Umgebung ausgesendet wird.

Es ist vorgesehen, dass mittels des ersten Ultraschallsensors das zweite in der Umgebung reflektierte Ultraschallsignal empfangen wird, und das erste empfangene Ultraschallsignal mit dem zweiten empfangenen Ultraschallsignal mittels einer elektronischen Recheneinrichtung der Ultraschallsensorvorrichtung verglichen wird und in Abhängigkeit von dem Vergleich die Verschmutzung mittels der elektronischen Recheneinrichtung bestimmt wird.

Somit kann verbessert eine Verschmutzungsbestimmung durchgeführt werden. Unter Schmutz ist insbesondere vorliegend Materie zu verstehen, die an dem Ultraschallsensor, vorliegend insbesondere einem ersten Ultraschallsensor, haftet. Insbesondere kann als Verschmutzung beispielsweise Schnee auf dem ersten Ultraschallsensor angesehen werden.

Durch den Schnee ist es beispielsweise verhindert, dass die Membran des Ultraschallsensors entsprechend schwingen kann. Somit ist die Funktionsfähigkeit des ersten Ultraschallsensors zumindest eingeschränkt. Insbesondere kann aufgrund des Schnees die Funktionsfähigkeit des ersten Ultraschallsensors vollumfänglich nicht bereitgestellt werden. Sollte nun dennoch das Assistenzsystem entsprechende Signale von dem ersten Ultraschallsensor bei einer Verschmutzung auswerten, so kann dies zu Falschdetektionen führen. Somit ist es von entscheidender Bedeutung, dass die Verschmutzung des ersten Ultraschallsensors zuverlässig detektiert werden kann.

Die Erfindung nutzt dabei aus, dass durch die Erweiterung der Ultraschallsensoren mittels modulierten Signalen diese nicht nur in der Lage sind, gleichzeitig Signale auszusenden und zu empfangen, sondern diese auch noch voneinander zu unterscheiden. Diese parallele Operation stellt zugleich den Lösungsansatz für die Freisichtprüfung dar, ohne eine Konfiguration des Ultraschallsensors zu verändern und ohne eine Unterbrechung der Endkundenfunktion, also beispielsweise einer Parkfunktion. Durch einen Vergleich von den zwei unterschiedlichen Ultraschallsignalen zur gleichen Zeit, wobei dies insbesondere bedeutet, dass der erste Ultraschallsensor sendet und empfängt, und gleichzeitig empfängt der erste Ultraschallsensor das zweite Ultraschallsignal des Nachbarultraschallsensors, also vorliegend des zweiten Ultraschallsensors. Bei den Messungen zur gleichen Zeit stellt sich unter normalen Bedingungen immer ein unterschiedlicher Signalverlauf der beiden Ultraschallsignale dar. Im Falle einer Verschmutzung durch beispielsweise Schnee sind beide Signalverläufe im Wesentlichen identisch, und beide enthalten keine Reflexionspunkte.

Mit anderen Worten nutzt das erfindungsgemäße Verfahren die Möglichkeit der Ultraschallsensoren, kodierte, also unterscheidbare, Ultraschallsignale auszusenden. Die Ultraschallsensoren sind dabei in der Lage, aus dem Empfangssignal, das beispielsweise zwei überlagerte kodierte Echos enthält, die beiden kodierten Echos zu extrahieren. Es wird nun davon ausgegangen, dass, wenn der erste Ultraschallsensor blockiert ist, für beide extrahierten Ultraschallsignale das Signal im Wesentlichen nur das Sensorrauschen enthält. Wenn also das Ergebnis für beide Kodierungen gleich ist, liegt eine Blockierung vor. Sind die Ergebnisse für die Kodierung unterschiedlich, liegt keine Verschmutzung vor.

Die beiden Ultraschallsignale werden im Wesentlichen gleichzeitig, also zeitgleich, ausgesendet.

Unter gleichzeitig ist vorliegend insbesondere zu verstehen, dass ohne zeitlichen Verzug das erste Ultraschallsignal und das zweite Ultraschallsignal ausgesendet werden. Aufgrund von technischen Gegebenheiten können selbstverständlich minimale Zeitunterschiede beim Aussenden aufgetreten, welche vorliegend jedoch zur Erläuterung des erfindungsgemäßen Verfahrens unberücksichtigt bleiben.

Gemäß einer vorteilhaften Ausgestaltungsform werden in Abhängigkeit von dem ersten empfangenen Ultraschallsignal eine erste Empfangskurve und in Abhängigkeit von dem zweiten empfangenen Ultraschallsignal eine zweite Empfangskurve mittels der elektronischen Recheneinrichtung erzeugt, und die erste Empfangskurve wird mit der zweiten Empfangskurve verglichen. Insbesondere weist die Empfangskurve Empfangsamplituden aufgelöst über die Zeit auf. Auf Basis von Reflexionen, beispielsweise auf dem Boden, entstehen Echos innerhalb der Empfangskurve. Durch das Vergleichen der Empfangskurven kann herausgefunden werden, ob der erste Ultraschallsensor verschmutzt ist. Insbesondere sollten die beiden Empfangskurven sich im Wesentlichen unterscheiden, so kann davon ausgegangen werden, dass keine Verschmutzung vorliegt. Sollten die Empfangskurven im Wesentlichen übereinstimmen, so kann davon ausgegangen werden, dass eine Verschmutzung vorliegt. Insbesondere weisen die Empfangskurven bei einer Verschmutzung keine Echoamplituden auf. Dies kann ebenfalls dafür genutzt werden, um eine Verschmutzung des ersten Ultraschallsensors zu identifizieren.

Erfindungsgemäß wird bei einer Abweichung des ersten empfangenen Ultraschallsignals von dem zweiten empfangenen Ultraschallsignal keine Verschmutzung des ersten Ultraschallsignals bestimmt. Insbesondere sollten also die beiden empfangenen Ultraschallsignale voneinander abweichen, so kann davon ausgegangen werden, dass die Freiraumprüfung positiv war und keine Verschmutzung des ersten Ultraschallsensors vorliegt. Somit kann auf eine normale Funktionsfähigkeit des ersten Ultraschallsensors geschlossen werden.

Ferner wird bei einer Übereinstimmung des ersten empfangenen Ultraschallsignals mit dem zweiten empfangenen Ultraschallsignal eine Verschmutzung des ersten Ultraschallsensors bestimmt. Insbesondere stimmen die Empfangssignale im Wesentlichen überein. Sollte also bei dem Vergleichen festgestellt werden, dass das erste Ultraschallsignal und das zweite Ultraschallsignal im Wesentlichen gleich sind, so kann darauf geschlossen werden, dass eine Verschmutzung des ersten Ultraschallsensors vorliegt. Dies kann dann wiederum dazu führen, dass dies dem Assistenzsystem mitgeteilt wird, so dass eine Auswertung der Ultraschallsignale beispielsweise bei einer Parkfunktion von diesem Ultraschallsensor unberücksichtigt bleibt.

In einer weiteren vorteilhaften Ausführungsform wird das erste Ultraschallsignal in einem unterschiedlichen Frequenzband ausgesendet als das zweite Ultraschallsignal. Durch das Aussenden auf unterschiedlichen Frequenzbändern ist es ermöglicht, dass unterschiedliche Ultraschallsignale ausgesendet werden. Somit kann durch eine entsprechende Extraktion beim ersten Ultraschallsensor zuverlässig das erste Ultraschallsignal vom zweiten Ultraschallsignal differenziert werden. Dadurch kann ein zuverlässiger Vergleich der beiden Ultraschallsignale realisiert werden.

Weiterhin vorteilhaft ist, wenn das erste Ultraschallsignal mit einer zum zweiten Ultraschallsignal unterschiedlichen Phasenmodulation ausgesendet wird. Bei der Phasenmodulation findet innerhalb des ausgesendeten Signals eine Phasenverschiebung statt. Durch die Phasenmodulation kann somit zuverlässig das erste Ultraschallsignal vom zweiten Ultraschallsignal differenziert werden. Dadurch kann eine zuverlässige Bestimmung der Verschmutzung durchgeführt werden.

Ferner hat es sich als vorteilhaft erwiesen, wenn das erste Ultraschallsignal mit einer zum zweiten Ultraschallsignal unterschiedlichen Frequenzmodulation ausgesendet wird. Insbesondere weist somit das erste Ultraschallsignal eine unterschiedliche Frequenzmodulation auf als das zweite Ultraschallsignal. Dadurch ist es ermöglicht, dass das erste Ultraschallsignal von dem zweiten Ultraschallsignal zuverlässig mittels des ersten Ultraschallsensors differenziert werden kann. Somit kann ein zuverlässiger Vergleich und somit eine zuverlässige Bestimmung der Verschmutzung realisiert werden.

Gemäß einer weiteren vorteilhaften Ausgestaltungsform wird das erste Ultraschallsignal mit einer Frequenzmodulation ausgesendet, bei welchem die Frequenz über die Zeit zunimmt, und das zweite Ultraschallsignal mit einer Frequenzmodulation ausgesendet, bei welcher die Frequenz über die Zeit abnimmt, oder es wird das erste Ultraschallsignal mit einer Frequenzmodulation ausgesendet, bei welcher die Frequenz über die Zeit abnimmt, und das zweite Ultraschallsignal wird mit einer Frequenzmodulation ausgesendet, bei welcher die Frequenz über die Zeit zunimmt. Ein Ultraschallsignal, bei welchem die Frequenz über die Zeit zunimmt, kann auch als Chirp-up bezeichnet wird. Ein Ultraschallsignal, bei welchem die Frequenz über die Zeit abnimmt, kann auch als Chirp-down bezeichnet werden. Insbesondere wird beispielsweise das erste Ultraschallsignal als Chirp-up-Signal ausgesendet, und das zweite Ultraschallsignal wird dann als Chirp-down-Signal ausgesendet. Alternativ kann dies auch umgekehrt geschehen. Dadurch ist es ermöglicht, dass der erste Ultraschallsensor zuverlässig das erste Ultraschallsignal von dem zweiten Ultraschallsignal differenzieren kann. Somit kann ein zuverlässiger Vergleich der beiden Ultraschallsignale realisiert werden. Dadurch ist die Bestimmung vorteilhaft ermöglicht.

Ebenfalls vorteilhaft ist, wenn ein Sensorrauschen des ersten Ultraschallsensors bei der Bestimmung der Verschmutzung berücksichtigt wird. Insbesondere kann es aufgrund von Sensorrauschen vorkommen, dass, obwohl eine Verschmutzung vorliegt, das erste Ultraschallsignal von dem zweiten Ultraschallsignal abweicht. Dies basiert insbesondere auf dem sensorinternen Rauschen. Durch die Berücksichtigung des sensorinternen Rauschens kann zuverlässig die Verschmutzung bestimmt werden.

Weiterhin vorteilhaft ist, wenn mittels eines Korrelationsfilters des ersten Ultraschallsensors das erste Ultraschallsignal und das zweite Ultraschallsignal voneinander extrahiert werden können. Auf Basis des Korrelationsfilters ist es ermöglicht, dass das erste Ultraschallsignal und das zweite Ultraschallsignal zuverlässig extrahiert werden können. Somit kann ein zuverlässiger Vergleich der beiden Ultraschallsignale realisiert werden.

In einer weiteren vorteilhaften Ausgestaltungsform wird die Bestimmung der Verschmutzung zeitlich vor einem Fahrtantritt durchgeführt. Beispielsweise kann nach einem Zündungsstart im Kraftfahrzeug die Freiraumprüfung durchgeführt werden. Beispielsweise nach dem Einsteigen eines Nutzers des Kraftfahrzeugs und nach dem Zündungsstart kann das erste Ultraschallsignal und das zweite Ultraschallsignal ausgesendet werden. Somit kann bereits vor Fahrtantritt eine Verschmutzungsüberprüfung durchgeführt werden. Alternativ oder ergänzend ist es ermöglicht, dass auch während der Fahrt, insbesondere in vorgegebenen zeitlichen Abständen, die Bestimmung der Verschmutzung durchgeführt werden kann. Ferner kann vorgesehen sein, dass, beispielsweise nach Betätigen eines Parkknopfes durch den Nutzer, wobei dieser insbesondere einen Parkvorgang einleiten kann, eine entsprechende Verschmutzungsüberprüfung durchgeführt werden kann.

Bei dem erfindungsgemäßen Verfahren handelt es sich insbesondere um ein computerimplementiertes Verfahren.

Ein weiterer Aspekt der Erfindung betrifft ein Computerprogrammprodukt mit Programmcodemitteln, welche in einem computerlesbaren Medium gespeichert sind, um das Verfahren zum Bestimmen einer Verschmutzung eines ersten Ultraschallsensors nach dem vorhergehenden Aspekt durchzuführen, wenn das Computerprogrammprodukt auf einem Prozessor einer elektronischen Recheneinrichtung einer Ultraschallsensorvorrichtung für ein Kraftfahrzeug mit zumindest einem ersten Ultraschallsensor, mit einem zweiten Ultraschallsensor und mit einer elektronischen Recheneinrichtung abgearbeitet wird.

Ein nochmals weiterer Aspekt der Erfindung betrifft ein computerlesbares Speichermedium mit einem Computerprogrammprodukt nach dem vorhergehenden Aspekt. Das Computerlesbare Speichermedium kann insbesondere als Teil einer elektronischen Recheneinrichtung ausgebildet sein.

Ein nochmals weiterer Aspekt der Erfindung betrifft eine Ultraschallsensorvorrichtung für ein Kraftfahrzeug mit zumindest einem ersten Ultraschallsensor, mit einem zweiten Ultraschallsensor und mit einer elektronischen Recheneinrichtung, wobei die Ultraschallsensorvorrichtung zum Durchführen eines Verfahrens nach dem vorhergehenden Aspekt ausgebildet ist. Insbesondere wird das Verfahren mittels der Ultraschallsensorvorrichtung durchgeführt.

Ein nochmals weiterer Aspekt der Erfindung betrifft ein Assistenzsystem mit einer Ultraschallsensorvorrichtung nach dem vorhergehenden Aspekt.

Ein nochmals weiterer Aspekt der Erfindung betrifft ein Kraftfahrzeug mit einem Assistenzsystem nach dem vorhergehenden Aspekt. Das Kraftfahrzeug ist zumindest teilweise autonom, insbesondere vollautonom, ausgebildet. Ferner ist das Kraftfahrzeug insbesondere als Personenkraftwagen ausgebildet.

Vorteilhafte Ausgestaltungsformen des Verfahrens sind als vorteilhafte Ausgestaltungsformen des Computerprogrammprodukts, des computerlesbaren Speichermediums, der Ultraschallsensorvorrichtung, des Assistenzsystems sowie des Kraftfahrzeugs anzusehen. Die Ultraschallsensorvorrichtung, das Assistenzsystem sowie das Kraftfahrzeug weisen dazu gegenständliche Merkmale auf, welche eine Durchführung des Verfahrens und eine vorteilhafte Ausgestaltungsform davon ermöglichen.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind.

Die Erfindung wird nun anhand von bevorzugten Ausführungsbeispielen sowie unter Bezugnahme auf die beigefügten Zeichnungen näher erläutert.

Dabei zeigen:
- Fig. 1: eine schematische Draufsicht auf eine Ausführungsform eines Kraftfahrzeugs mit einer Ausführungsform eines Assistenzsystems;
- Fig. 2: ein schematisches Diagramm von empfangenen Ultraschallsignalen; und
- Fig. 3: ein weiteres schematisches Diagramm von empfangenen Ultraschallsignalen.

In den Figuren sind gleiche oder funktionsgleiche Elemente mit gleichen Bezugszeichen versehen.

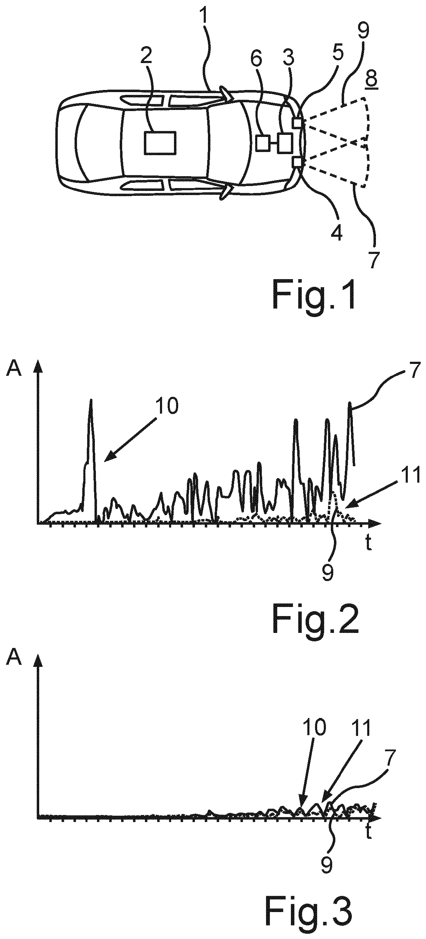

Fig. 1 zeigt eine schematische Draufsicht auf einen Ausführungsform eines Kraftfahrzeugs 1 mit einer Ausführungsform eines Assistenzsystems 2. Das Assistenzsystem 2 kann beispielsweise als Parkassistenzsystem 2 ausgeführt sein. Das Kraftfahrzeug 1 kann zumindest teilweise autonom, insbesondere vollautonom, ausgebildet sein. Das Kraftfahrzeug 1 beziehungsweise das Assistenzsystem 2 weist eine Ultraschallsensorvorrichtung 3 auf. Die Ultraschallsensorvorrichtung 3 weist im vorliegenden Ausführungsbeispiel zwei Ultraschallsensoren 4, 5 auf. Es sei an dieser Stelle erwähnt, dass dies rein beispielhaft ist. Die Ultraschallsensorvorrichtung 3 kann auch weitere Ultraschallsensoren 4, 5 aufweisen. Im vorliegenden Ausführungsbeispiel ist die Ultraschallsensorvorrichtung 3 an einem Frontteil des Kraftfahrzeugs 1 ausgebildet. Es ist selbstverständlich, dass die Ultraschallsensorvorrichtung 3 beispielsweise auch an einem Heck und/oder an einer Seite des Kraftfahrzeugs 1 ausgebildet sein kann.

Um das erfindungsgemäße Verfahren durchführen zu können, weist die Ultraschallsensorvorrichtung 3 ferner eine elektronische Recheneinrichtung 6 auf. Die elektronische Recheneinrichtung 6 wiederum weist beispielsweise ein computerlesbares Speichermedium und ein Computerprogrammprodukt auf, welches vorliegend nicht dargestellt ist.

Beim Verfahren zum Bestimmen einer Verschmutzung des ersten Ultraschallsensors 4 der Ultraschallsensorvorrichtung 3 des Assistenzsystems 2 des Kraftfahrzeugs 1 wird mittels des ersten Ultraschallsensors 4 ein erstes Ultraschallsignal 7 in eine Umgebung 8 des Kraftfahrzeugs 1 ausgesendet, und das erste in der Umgebung 8 reflektierte Ultraschallsignal 7 wird mittels des ersten Ultraschallsensors 4 empfangen, und es wird mittels eines zweiten Ultraschallsensors 5 im Wesentlichen gleichzeitig mit dem ersten Ultraschallsignal 7 ein zum ersten Ultraschallsignal 7 unterschiedliches zweites Ultraschallsignal 9 in die Umgebung 8 ausgesendet.

Es ist vorgesehen, dass mittels des ersten Ultraschallsensors 4 das zweite in der Umgebung 8 reflektierte Ultraschallsignal 9 empfangen wird und das erste empfangene Ultraschallsignal 7 mit dem zweiten empfangenen Ultraschallsignal 9 mittels der elektronischen Recheneinrichtung 6 der Ultraschallsensorvorrichtung 3 verglichen wird und in Abhängigkeit von dem Vergleich die Verschmutzung mittels der elektronischen Recheneinrichtung 6 bestimmt wird.

Insbesondere kann vorgesehen sein, dass das erste Ultraschallsignal 7 in einem unterschiedlichen Frequenzband ausgesendet wird als das zweite Ultraschallsignal 9. Alternativ oder ergänzend kann das erste Ultraschallsignal 7 mit einer zum zweiten Ultraschallsignal 9 unterschiedlichen Phasenmodulation ausgesendet werden. Nochmals alternativ oder ergänzend kann das erste Ultraschallsignal 7 mit einer zum zweiten Ultraschallsignal 9 unterschiedlichen Frequenzmodulation ausgesendet werden. Dabei kann ferner vorgesehen sein, dass das erste Ultraschallsignal 7 mit einer Frequenzmodulation ausgesendet wird, bei welcher die Frequenz über die Zeit t (Fig. 2) zunimmt, und das zweite Ultraschallsignal 9 mit einer Frequenzmodulation ausgesendet wird, bei welcher die Frequenz über die Zeit t abnimmt, oder das erste Ultraschallsignal 7 mit einer Frequenzmodulation ausgesendet wird, bei welcher die Frequenz über die Zeit t abnimmt, und das zweite Ultraschallsignal mit einer Frequenzmodulation ausgesendet wird, bei welcher die Frequenz über die Zeit t zunimmt. Bei einem Ultraschallsignal 7, 9, bei welchem die Frequenz über die Zeit zunimmt, wird insbesondere von einem Chirp-up gesprochen. Bei einem Ultraschallsignal 7, 9, bei welchem die Frequenz über die Zeit t abnimmt, wird insbesondere von einem Chirp-down gesprochen.

Ferner kann insbesondere vorgesehen sein, dass die Bestimmung der Verschmutzung zeitlich vor einem Fahrtantritt durchgeführt wird.

Fig. 2 zeigt ein schematisches Diagramm von empfangenen unterschiedlichen Ultraschallsignalen 7, 9. Vorliegend sind die Ultraschallsignale 7, 9 insbesondere als Empfangskurven 10, 11 dargestellt. Auf der Abszisse ist die Zeit t aufgetragen und auf der Ordinate die Amplitude. Insbesondere zeigt die Fig. 2, dass die Empfangskurven 10, 11 entsprechende Echos aufweisen, was durch entsprechende unterschiedliche Amplituden bei den unterschiedlichen Zeitpunkten t gezeigt ist.

Insbesondere ist vorliegend gezeigt, dass in Abhängigkeit von dem ersten empfangenen Ultraschallsignal 7 eine erste Empfangskurve 10 und in Abhängigkeit von dem zweiten empfangenen Ultraschallsignal 9 eine zweite Empfangskurve 11 mittels der elektronischen Recheneinrichtung 6 erzeugt werden und die erste Empfangskurve 10 mit der zweiten Empfangskurve 11 verglichen wird. Die Fig. 2 zeigt insbesondere eine Abweichung der Ultraschallsignale 7, 9 beziehungsweise der Empfangskurven 10, 11 voneinander. Insbesondere kann dann bei einer Abweichung des ersten empfangenen Ultraschallsignals 7 von dem zweiten empfangenen Ultraschallsignal 9 keine Verschmutzung des ersten Ultraschallsensors 4 bestimmt werden.

Wie vorliegend gezeigt, kann zum Extrahieren der Ultraschallsignale 7, 9 ein Korrelationsfilter eingesetzt werden. Somit kann zuverlässig das erste Ultraschallsignal 7 von dem zweiten Ultraschallsignal 9 unterschieden werden.

Die Fig. 2 zeigt somit insbesondere sogenannte Hüllkurven, wobei die erste Empfangskurve 10 eine direkte Messung des ersten Ultraschallsensors 4 des eigene ausgesendeten ersten Ultraschallsignals 7 darstellt und die zweite Empfangskurve 11 die indirekte Messung des zweiten Ultraschallsignals 9 des zweiten Ultraschallsensors 5.

Aufgrund der unterschiedlichen Reflexionen, beispielsweise an einem Boden, unterscheiden sich beide Empfangskurven 10, 11 deutlich voneinander.

Fig. 3 ein weiteres schematisches Diagramm bezüglich der empfangenen Ultraschallsignale 7, 9. In der Fig. 3 sind erneut die erste Empfangskurve 10 und die zweite Empfangskurve 11 gezeigt. Vorliegend ist insbesondere zu sehen, dass im Wesentlichen eine Übereinstimmung zwischen der ersten Empfangskurve 10 und der zweiten Empfangskurve 11 beziehungsweise im ersten Ultraschallsignal 7 mit dem zweiten Ultraschallsignal 9 zu verzeichnen ist. Bei der Übereinstimmung des ersten empfangenen Ultraschallsignals 7 und des zweiten Ultraschallsignals 9 kann insbesondere eine Verschmutzung des ersten Ultraschallsensors 4 bestimmt werden. Insbesondere zeigt die Fig. 3, dass der erste Ultraschallsensor 4 aufgrund der Verschmutzung nicht in der Lage ist, etwas zu detektieren, was insbesondere dadurch gekennzeichnet ist, dass die erste Empfangskurve 10 und die zweite Empfangskurve 11 keine Echos mehr enthalten und im Wesentlichen gleich sind.

Insbesondere ist über die Zeit t zu sehen, dass insbesondere bei einer fortgeschrittenen Empfangszeit ein Eigenrauschen angezeigt ist, welches über den Abstand verstärkt wird. Insbesondere kann nun vorgesehen sein, dass das Sensorrauschen des ersten Ultraschallsensors 4 bei der Bestimmung der Verschmutzung berücksichtigt wird.

Durch das vorgeschlagene Verfahren kann insbesondere die Verschmutzung innerhalb eines einzigen Messzyklus realisiert werden. Insbesondere ist keine zusätzliche Konfiguration der Ultraschallsensorvorrichtung 3 notwendig. Des Weiteren muss keine Funktion der Ultraschallsensorvorrichtung 3, beispielsweise Parkfunktion, unterbrochen werden. Es handelt sich vorliegend ferner um eine einfache Methodik, zum Beispiel durch den Vergleich eines Floating Average den, oder einer Subtraktion beider Empfangskurven 10, 11 oder sonstigen sehr einfachen Vergleichsmethoden. Ferner ist das erfindungsgemäße Verfahren unabhängig von der Modulationsart.

Insbesondere zeigen Fig. 1 bis Fig. 3 eine Blindheitserkennung des ersten Ultraschallsensors 4 mittels eines Kanalvergleichs.

## Patentansprüche

1. Verfahren zum Bestimmen einer Verschmutzung eines ersten Ultraschallsensors (4) einer Ultraschallsensorvorrichtung (3) eines Assistenzsystems (2) eines Kraftfahrzeugs (1), bei welchem mittels des ersten Ultraschallsensors (4) ein erstes Ultraschallsignal (7) in eine Umgebung (8) des Kraftfahrzeugs (1) ausgesendet wird und das erste in der Umgebung (8) reflektierte Ultraschallsignal (7) mittels des ersten Ultraschallsensors (4) empfangen wird, und bei welchem mittels eines zweiten Ultraschallsensors (5) der Ultraschallsensorvorrichtung (3) im Wesentlichen gleichzeitig mit dem ersten Ultraschallsignal (7) ein zum ersten Ultraschallsignal (7) unterschiedliches zweites Ultraschallsignal (9) in die Umgebung (8) ausgesendet wird,
**dadurch gekennzeichnet, dass**
mittels des ersten Ultraschallsensors (4) das zweite in der Umgebung (8) reflektierte Ultraschallsignal (9) empfangen wird und das erste empfangene Ultraschallsignal (7) mit dem zweiten empfangenen Ultraschallsignal (8) mittels einer elektronischen Recheneinrichtung (6) der Ultraschallsensorvorrichtung (3) verglichen wird und in Abhängigkeit von dem Vergleich die Verschmutzung mittels der elektronischen Recheneinrichtung (6) bestimmt wird,
dass bei einer Abweichung des ersten empfangenen Ultraschallsignals (7) von dem zweiten empfangenen Ultraschallsignal (9) keine Verschmutzung des ersten Ultraschallsensors (4) bestimmt wird, und
dass bei einer Übereinstimmung des ersten empfangenen Ultraschallsignals (7) mit dem zweiten empfangenen Ultraschallsignal (9) eine Verschmutzung des ersten Ultraschallsensors (4) bestimmt wird.

2. Verfahren nach Anspruch 1,
**dadurch gekennzeichnet, dass**
in Abhängigkeit von dem ersten empfangenen Ultraschallsignal (7) eine erste Empfangskurve (10) und in Abhängigkeit von dem zweiten empfangenen Ultraschallsignal (9) eine zweite Empfangskurve (11) mittels der elektronischen Recheneinrichtung (6) erzeugt werden und die erste Empfangskurve (10) mit der zweiten Empfangskurve (11) verglichen wird.

3. Verfahren nach einem der vorhergehenden Ansprüche,
**dadurch gekennzeichnet, dass**
das erste Ultraschallsignal (7) in einem unterschiedlichen Frequenzband ausgesendet wird als das zweite Ultraschallsignal (9).

4. Verfahren nach einem der vorhergehenden Ansprüche,
**dadurch gekennzeichnet, dass**
das erste Ultraschallsignal (7) mit einer zum zweiten Ultraschallsignal (9) unterschiedlichen Phasenmodulation ausgesendet wird.

5. Verfahren nach einem der vorhergehenden Ansprüche,
**dadurch gekennzeichnet, dass**
das erste Ultraschallsignal (7) mit einer zum zweiten Ultraschallsignal (9) unterschiedlichen Frequenzmodulation ausgesendet wird.

6. Verfahren nach Anspruch 5,
**dadurch gekennzeichnet, dass**
das erste Ultraschallsignal (7) mit einer Frequenzmodulation ausgesendet wird, bei welchem die Frequenz über die Zeit (t) zunimmt, und das zweite Ultraschallsignal (9) mit einer Frequenzmodulation ausgesendet wird, bei welchem die Frequenz über die Zeit (t) abnimmt, oder das erste Ultraschallsignal (7) mit einer Frequenzmodulation ausgesendet wird, bei welchem die Frequenz über die Zeit (t) abnimmt, und das zweite Ultraschallsignal (9) mit einer Frequenzmodulation ausgesendet wird, bei welchem die Frequenz über die Zeit (t) zunimmt.

7. Verfahren nach einem der vorhergehenden Ansprüche,
**dadurch gekennzeichnet, dass**
ein Sensorrauschen des ersten Ultraschallsensors (4) bei der Bestimmung der Verschmutzung berücksichtigt wird.

8. Verfahren nach einem der vorhergehenden Ansprüche,
**dadurch gekennzeichnet, dass**
mittels eines Korrelationsfilters des ersten Ultraschallsensors (4) das erste Ultraschallsignal (7) und das zweite Ultraschallsignal (9) voneinander extrahiert werden.

9. Verfahren nach einem der vorhergehenden Ansprüche,
**dadurch gekennzeichnet, dass**
die Bestimmung der Verschmutzung zeitlich vor einem Fahrtantritt durchgeführt wird.

10. Computerprogrammprodukt mit Programmcodemitteln mit Programmcodemitteln, welche in einem computerlesbaren Speichermedium gespeichert sind, um das Verfahren nach einem der vorhergehenden Ansprüche 1 bis 9 durchzuführen, wenn das Computerprogrammprodukt auf einem Prozessor der elektronischen Recheneinrichtung (6) der Ultraschallsensorvorrichtung nach Anspruch 12 abgearbeitet wird.

11. Computerlesbares Speichermedium mit einem Computerprogrammprodukt nach Anspruch 10.

12. Ultraschallsensorvorrichtung (3) für ein Kraftfahrzeug (1), mit zumindest einem ersten Ultraschallsensor (4), mit einem zweiten Ultraschallsensor (5) und mit einer elektronischen Recheneinrichtung (6), wobei die Ultraschallsensorvorrichtung (3) zum Durchführen eines Verfahrens nach einem der Ansprüche 1 bis 9 ausgebildet ist.

13. Assistenzsystem (2) mit einer Ultraschallsensorvorrichtung (3) nach Anspruch 12.

## Claims

1. Method for determining soiling of a first ultrasonic sensor (4) of an ultrasonic sensor apparatus (3) of an assistance system (2) of a motor vehicle (1), in which the first ultrasonic sensor (4) is used to transmit a first ultrasonic signal (7) into surroundings (8) of the motor vehicle (1) and the first ultrasonic signal (7), reflected in the surroundings (8), is received by means of the first ultrasonic sensor (4), and in which a second ultrasonic sensor (5) of the ultrasonic sensor apparatus (3) is used to transmit a second ultrasonic signal (9), which is different than the first ultrasonic signal (7), into the surroundings (8) essentially simultaneously with the first ultrasonic signal (7),
**characterized in that**
the first ultrasonic sensor (4) is used to receive the second ultrasonic signal (9) reflected in the surroundings (8), and the first received ultrasonic signal (7) is compared with the second received ultrasonic signal (8) by means of an electronic computing device (6) of the ultrasonic sensor apparatus (3) and the comparison is taken as a basis for the soiling to be determined by means of the electronic computing device (6),
**in that** no soiling of the first ultrasonic sensor (4) is determined if the first received ultrasonic signal (7) differs from the second received ultrasonic signal (9), and
**in that** soiling of the first ultrasonic sensor (4) is determined if the first received ultrasonic signal (7) matches the second received ultrasonic signal (9).

2. Method according to Claim 1,
**characterized in that**
the first received ultrasonic signal (7) is taken as a basis for a first reception curve (10), and the second received ultrasonic signal (9) is taken as a basis for a second reception curve (11), to be generated by means of the electronic computing device (6), and the first reception curve (10) is compared with the second reception curve (11).

3. Method according to either of the preceding claims,
**characterized in that**
the first ultrasonic signal (7) is transmitted in a different frequency band than the second ultrasonic signal (9).

4. Method according to one of the preceding claims,
**characterized in that**
the first ultrasonic signal (7) is transmitted with a different phase modulation than the second ultrasonic signal (9).

5. Method according to one of the preceding claims,
**characterized in that**
the first ultrasonic signal (7) is transmitted with a different frequency modulation than the second ultrasonic signal (9).

6. Method according to Claim 5,
**characterized in that**
the first ultrasonic signal (7) is transmitted with a frequency modulation for which the frequency increases over time (t), and the second ultrasonic signal (9) is transmitted with a frequency modulation for which the frequency decreases over time (t), or the first ultrasonic signal (7) is transmitted with a frequency modulation for which the frequency decreases over time (t), and the second ultrasonic signal (9) is transmitted with a frequency modulation for which the frequency increases over time (t).

7. Method according to one of the preceding claims,
**characterized in that**
sensor noise of the first ultrasonic sensor (4) is taken into account when determining the soiling.

8. Method according to one of the preceding claims,
**characterized in that**
a correlation filter of the first ultrasonic sensor (4) is used to extract the first ultrasonic signal (7) and the second ultrasonic signal (9) from one another.

9. Method according to one of the preceding claims,
**characterized in that**
the soiling is determined before the start of a journey.

10. Computer program product having program code means having program code means that are stored in a computer-readable storage medium in order to carry out the method according to one of preceding Claims 1 to 9 when the computer program product is executed on a processor of the electronic computing device (6) of the ultrasonic sensor apparatus according to Claim 12.

11. Computer-readable storage medium having a computer program product according to Claim 10.

12. Ultrasonic sensor apparatus (3) for a motor vehicle (1), having at least one first ultrasonic sensor (4), having a second ultrasonic sensor (5) and having an electronic computing device (6), the ultrasonic sensor apparatus (3) being designed to carry out a method according to one of Claims 1 to 9.

13. Assistance system (2) having an ultrasonic sensor apparatus (3) according to Claim 12.

## Revendications

1. Procédé de détermination d'un encrassement d'un premier capteur à ultrasons (4) d'un arrangement de capteurs à ultrasons (3) d'un système d'assistance (2) d'un véhicule automobile (1), avec lequel, au moyen du premier capteur à ultrasons (4), un premier signal ultrasonore (7) est émis dans un environnement (8) du véhicule automobile (1) et le premier signal ultrasonore (7) réfléchi dans l'environnement (8) est reçu au moyen du premier capteur à ultrasons (4), et avec lequel, au moyen d'un deuxième capteur à ultrasons (5) de l'arrangement de capteurs à ultrasons (3), un deuxième signal ultrasonore (9), différent du premier signal ultrasonore (7), est émis dans l'environnement (8) sensiblement en même temps que le premier signal ultrasonore (7),
**caractérisé en ce que**
le deuxième signal ultrasonore (9) réfléchi dans l'environnement (8) est reçu au moyen du premier capteur à ultrasons (4) et le premier signal ultrasonore (7) reçu est comparé au deuxième signal ultrasonore (8) reçu au moyen d'un dispositif de calcul électronique (6) de l'arrangement de capteurs à ultrasons (3) et, en fonction de la comparaison, l'encrassement est déterminé au moyen du dispositif de calcul électronique (6),
**en ce qu'**en cas d'écart entre le premier signal ultrasonore (7) reçu et le deuxième signal ultrasonore (9) reçu, aucun encrassement du premier capteur à ultrasons (4) n'est déterminé, et
**en ce qu'**en cas de concordance du premier signal ultrasonore (7) reçu avec le deuxième signal ultrasonore (9) reçu, un encrassement du premier capteur à ultrasons (4) est déterminé.

2. Procédé selon la revendication 1,
**caractérisé en ce que**
une première courbe de réception (10) est générée en fonction du premier signal ultrasonore (7) reçu et une deuxième courbe de réception (11) est générée en fonction du deuxième signal ultrasonore (9) reçu au moyen du dispositif de calcul électronique (6) et la première courbe de réception (10) est comparée à la deuxième courbe de réception (11).

3. Procédé selon l'une des revendications précédentes,
**caractérisé en ce que**
le premier signal ultrasonore (7) est émis dans une bande de fréquences différente de celle du deuxième signal ultrasonore (9).

4. Procédé selon l'une des revendications précédentes,
**caractérisé en ce que**
le premier signal ultrasonore (7) est émis avec une modulation de phase différente de celle du deuxième signal ultrasonore (9).

5. Procédé selon l'une des revendications précédentes,
**caractérisé en ce que**
le premier signal ultrasonore (7) est émis avec une modulation de fréquence différente de celle du deuxième signal ultrasonore (9).

6. Procédé selon la revendication 5,
**caractérisé en ce que**
le premier signal ultrasonore (7) est émis avec une modulation de fréquence avec laquelle la fréquence augmente au cours du temps (t) et le deuxième signal ultrasonore (9) est émis avec une modulation de fréquence avec laquelle la fréquence diminue au cours du temps (t), ou le premier signal ultrasonore (7) est émis avec une modulation de fréquence avec laquelle la fréquence diminue au cours du temps (t) et le deuxième signal ultrasonore (9) est émis avec une modulation de fréquence avec laquelle la fréquence augmente au cours du temps (t).

7. Procédé selon l'une des revendications précédentes,
**caractérisé en ce que**
un bruit de capteur du premier capteur à ultrasons (4) est pris en compte lors de la détermination de l'encrassement.

8. Procédé selon l'une des revendications précédentes,
**caractérisé en ce que**
le premier signal ultrasonore (7) et le deuxième signal ultrasonore (9) sont extraits l'un de l'autre au moyen d'un filtre de corrélation du premier capteur à ultrasons (4).

9. Procédé selon l'une des revendications précédentes,
**caractérisé en ce que**
la détermination de l'encrassement est effectuée avant le début du trajet.

10. Produit de programme informatique, comprenant des moyens de code de programme comprenant des moyens de code de programme qui sont enregistrés dans un support de mémorisation lisible par ordinateur afin de mettre en œuvre le procédé selon l'une des revendications précédentes 1 à 9 lorsque le produit de programme informatique est exécuté sur un processeur du dispositif de calcul électronique (6) de l'arrangement de capteurs à ultrasons selon la revendication 12.

11. Support de mémorisation lisible par ordinateur comprenant un produit de programme informatique selon la revendication 10.

12. Arrangement de capteurs à ultrasons (3) pour un véhicule automobile (1), comprenant au moins un premier capteur à ultrasons (4), comprenant un deuxième capteur à ultrasons (5) et comprenant un dispositif de calcul électronique (6), l'arrangement de capteurs à ultrasons (3) étant configuré pour mettre en œuvre un procédé selon l'une des revendications 1 à 9.

13. Système d'assistance (2) comprenant un arrangement de capteurs à ultrasons (3) selon la revendication 12.
